# EUROPÄISCHE PATENTSCHRIFT

(11) **EP 3 480 519 B1**
(45) Veröffentlichungstag und Bekanntmachung des Hinweises auf die Patenterteilung: **05.08.2020**
(21) Anmeldenummer: 18202503.1
(22) Anmeldetag: 25.10.2018
(51) Int. Cl.: F23D 3/40, F24H 3/06

(54) **FAHRZEUGHEIZGERÄT**
VEHICLE HEATING DEVICE
APPAREIL CHAUFFANT POUR VÉHICULE

(30) Priorität: 06.11.2017 DE 102017125783
(43) Veröffentlichungstag der Anmeldung: 08.05.2019
(73) Patentinhaber: Eberspächer Climate Control Systems GmbH & Co. KG, 73730 Esslingen (DE)
(72) Erfinder: Blaschke, Walter, 73779 Deizisau (DE); Collmer, Andreas, 73773 Aichwald (DE); Haefner, Michael, 70469 Stuttgart (DE)
(74) Vertreter: Ruttensperger Lachnit Trossin Gomoll

(56) Entgegenhaltungen:
- EP-A1- 3 091 306
- WO-A1-2016/195046
- DE-A1- 3 310 501
- DE-A1- 3 509 346
- DE-A1- 10 136 292
- DE-B3-102013 002 046

## Beschreibung

Die vorliegende Erfindung betrifft ein brennstoffbetriebenes Fahrzeugheizgerät, wie zum Beispiel aus der Patentschrift DE 10 2013 002 046 B3 bekannt.

Ein brennstoffbetriebenes Fahrzeugheizgerät kann derart aufgebaut sein, dass an einem an seiner Außenseite von zu erwärmender Luft umströmbaren Wärmetauschergehäuse eine Brennkammerbaugruppe getragen ist. Der Brennkammerbaugruppe werden Verbrennungsluft und flüssiger Brennstoff zugeführt und in einer Brennkammer gemischt. Bei der Verbrennung des so gebildeten Gemisches entsteht Verbrennungsabgas, das entlang der Innenseite des Wärmetauschergehäuses strömt und dabei Wärme auf dieses überträgt.

Ein beispielsweise einen Teil des Wärmetauschergehäuses bildendes Gehäuse umgrenzt mit einer Umfangswandung einen Verbrennungsluftströmungsraum, in welchem die von einem Verbrennungsluftgebläse geförderte Verbrennungsluft zur Brennkammerbaugruppe strömen kann. Das Verbrennungsluftgebläse weist ein Gebläsegehäuse auf, welches angrenzend an eine Stirnseite der Umfangswandung positioniert ist und in diesem Bereich mit dem Gehäuse bzw. dem Wärmetauschergehäuse fest verbunden ist, so dass der zum Verbrennungsluftgebläse in Richtung einer Gehäuselängsachse hin grundsätzlich offene Verbrennungsluftströmungsraum durch das Verbrennungsluftgebläse überdeckt und somit in dieser Richtung abgeschlossen ist.

Um den für die Verbrennung erforderlichen flüssigen Brennstoff in Richtung zur Brennkammerbaugruppe fördern zu können, erstreckt sich eine an die Brennkammerbaugruppe anschließende Brennstoffzuführleitung durch den Verbrennungsluftströmungsraum und durchsetzt eine in der Umfangswandung ausgebildete Brennstoffzuführleitung-Durchtrittsöffnung. Um sowohl im Bereich der Brennstoffzuführleitung-Durchtrittsöffnung, als auch im Angrenzungsbereich des Gehäuses an das Gebläsegehäuse einen im Wesentlichen fluiddichten Abschluss des Verbrennungsluftströmungsraums zu erreichen, ist eine Dichtformation vorgesehen.

Es ist die Aufgabe der vorliegenden Erfindung, ein Fahrzeugheizgerät derart auszugestalten, dass bei einfach zu realisierendem Aufbau ein zuverlässiger Abschluss eines Verbrennungsluftströmungsraums gewährleistet werden kann.

Erfindungsgemäß wird diese Aufgabe gelöst durch ein Fahrzeugheizgerät, umfassend
- eine mit Brennstoff und Verbrennungsluft zu speisende Brennkammerbaugruppe,
- ein mit einer Umfangswandung einen Verbrennungsluftströmungsraum umgrenzendes Gehäuse,
- ein in Richtung einer Gehäuselängsachse an eine Stirnseite der Umfangswandung des Gehäuses anschließendes Verbrennungsluftgebläse zum Fördern von Verbrennungsluft in den Verbrennungsluftströmungsraum,
- eine an die Brennkammerbaugruppe anschließende Brennstoffzuführleitung zum Zuführen von Brennstoff zu der Brennkammerbaugruppe, wobei in der Umfangswandung eine zu der Stirnseite der Umfangswandung offene Brennstoffzuführleitung-Durchtrittsöffnung vorgesehen ist,
- eine Dichtformation mit einem ersten Dichtformationsbereich, wobei der erste Dichtformationsbereich zum Herstellen eines im Wesentlichen fluiddichten Abschlusses zwischen der Stirnseite der Umfangswandung und einem Gebläsegehäuse des Verbrennungsluftgebläses zwischen der Stirnseite der Umfangswandung und dem Gebläsegehäuse angeordnet ist, und mit einem zweiten Dichtformationsbereich, wobei der zweite Dichtformationsbereich zum Herstellen eines im Wesentlichen fluiddichten Abschlusses zwischen der Umfangswandung und der Brennstoffzuführleitung in die Brennstoffzuführleitung-Durchgriffsöffnung eingreifend positioniert ist, wobei die Dichtformation ein den ersten Dichtformationsbereich und den zweiten Dichtformationsbereich bereitstellendes Dichtelement umfasst.

Da bei dem erfindungsgemäß aufgebauten Fahrzeugheizgerät das im wesentlichen die Dichtformation bereitstellende Dichtelement sowohl den ersten Dichtformationsbereich, als auch den zweiten Dichtformationsbereich als integrale Bestandteile desselben aufweist, wird einerseits der Vorgang des Zusammenbaus eines erfindungsgemäßen Fahrzeugheizgeräts vereinfacht. Andererseits wird dort, wo die Brennstoffzuführleitung-Durchgriffsöffnung zur Stirnseite der Umfangswandung offen ist und somit die beiden Dichtformationsbereiche aneinander anschließen, durch die integrale Ausgestaltung dieser Dichtformationsbereiche als Bestandteile des Dichtelements ein zuverlässiger fluiddichter Abschluss gewährleistet.

Da im Allgemeinen die Umfangswandung den Verbrennungsluftströmungsraum nach radial außen abschließt und diesen somit ringartig umgibt, wird weiter vorgeschlagen, dass der erste Dichtformationsbereich an eine Umfangskontur der Umfangswandung angepasst ringartig ausgebildet ist.

Der zweite Dichtformationsbereich kann zum Herstellen eines zuverlässigen Anschlusses an die Umfangswandung vom ersten Dichtformationsbereich sich im Wesentlichen in Richtung der Gehäuselängsachse abstehend und in die Brennstoffzuführleitung-Durchtrittsöffnung eingreifend erstrecken und kann eine an eine Kontur der Brennstoffzuführleitung-Durchtrittsöffnung angepasste Außenumfangskontur aufweisen.

Für den Durchtritt der Brennstoffzuführleitung durch den zweiten Dichtformationsbereich kann dieser eine von der Brennstoffzuführleitung durchsetzte Öffnung aufweisen.

Unter verschiedenen Betriebsbedingungen besteht die Gefahr, dass nicht verbrannter flüssiger Brennstoff aus der Brennkammerbaugruppe austritt und sich im Verbrennungsluftströmungsraum ansammelt. Insbesondere dann, wenn ein Fahrzeugheizgerät so in ein Fahrzeug eingebaut ist, das, die Brennstoffzuführleitung-Durchtrittsöffnung in einer Höhenrichtung unten positioniert ist, wird derartiger flüssiger Brennstoff sich im Bereich der Brennstoffzuführleitung-Durchtrittsöffnung, d.h. im Bereich des zweiten Dichtformationsbereichs, ansammeln. Da insbesondere bei über eine längere Zeitdauer hinweg in einem derartigen Zustand verbleibendem Fahrzeugheizgerät nicht vollkommen ausgeschlossen werden kann, dass zumindest kleine Mengen flüssigen Brennstoffs insbesondere dort, wo der zweite Dichtformationsbereich an die Brennstoffzuführleitung anschließt, hindurch gelangen, wird gemäß einem weiteren Aspekt der vorliegenden Erfindung vorgeschlagen, dass an einer Außenseite der Umfangswandung eine Pufferkammer vorgesehen ist, wobei die Pufferkammer an der Stirnseite der Umfangswandung in Richtung der Gehäuselängsachse offen ist und nach radial innen durch die Umfangswandung und nach radial außen und in Umfangsrichtung durch eine an die Umfangswandung anschließende Pufferkammerwandung begrenzt ist, wobei in der Pufferkammerwandung eine von der Brennstoffzuführleitung durchsetzte Öffnung vorgesehen ist, und dass der zweite Dichtformationsbereich im Bereich der Umfangswandung einen im Wesentlichen fluiddichten Abschluss zwischen der Pufferkammer und dem Verbrennungsluftströmungsraum herstellt. In einer derartigen Pufferkammer kann flüssiger Brennstoff sich ansammeln und in definierter Weise zur Umgebung hin abgegeben werden, ohne dass die Gefahr besteht, dass der flüssige Brennstoff in den Strom der erwärmt in den Fahrzeuginnenraum einzuleitenden Luft gelangen kann.

Um auch dort, wo die Pufferkammer gebildet ist, einen im Wesentlichen fluiddichten Anschluss an das Gebläsegehäuse zu gewährleisten, wird vorgeschlagen, dass die Dichtformation einen dritten Dichtformationsbereich aufweist, wobei der dritte Dichtformationsbereich zur Herstellung eines im Wesentlichen fluiddichten Abschlusses zwischen der Pufferkammerwandung und dem Gebläsegehäuse zwischen der Pufferkammerwandung und dem Gebläsegehäuse angeordnet ist.

Bei derartiger Ausgestaltung weist bei einer besonders vorteilhaften Ausgestaltung das Dichtelement den dritten Dichtformationsbereich auf. Auch dies trägt zu einem einfach zu realisierenden und zuverlässig wirkenden Aufbau bei.

Das Dichtelement ist vorzugsweise aus Elastomermaterial aufgebaut ist. Da das Dichtelement in Kontakt mit dem der Brennkammerbaugruppe zuzuführenden flüssigen Brennstoff, also beispielsweise Benzin oder Diesel, gelangen kann, wird für den Aufbau des Dichtelements weiter vorzugsweise brennstoffbeständiges Material eingesetzt.

Für einen weiter vereinfachten Aufbau wird vorgeschlagen, dass das Gehäuse Teil eines Wärmetauschergehäuses ist, und dass die Brennkammerbaugruppe an einem Bodenbereich des Wärmetauschergehäuses getragen ist. Insbesondere kann das Wärmetauschergehäuse mit dem einen Bestandteil desselben bildenden Gehäuse als Metall-Gussbauteil bereitgestellt werden.

Die vorliegende Erfindung wird nachfolgend mit Bezug auf die beiliegenden Figuren detailliert beschrieben. Es zeigt:

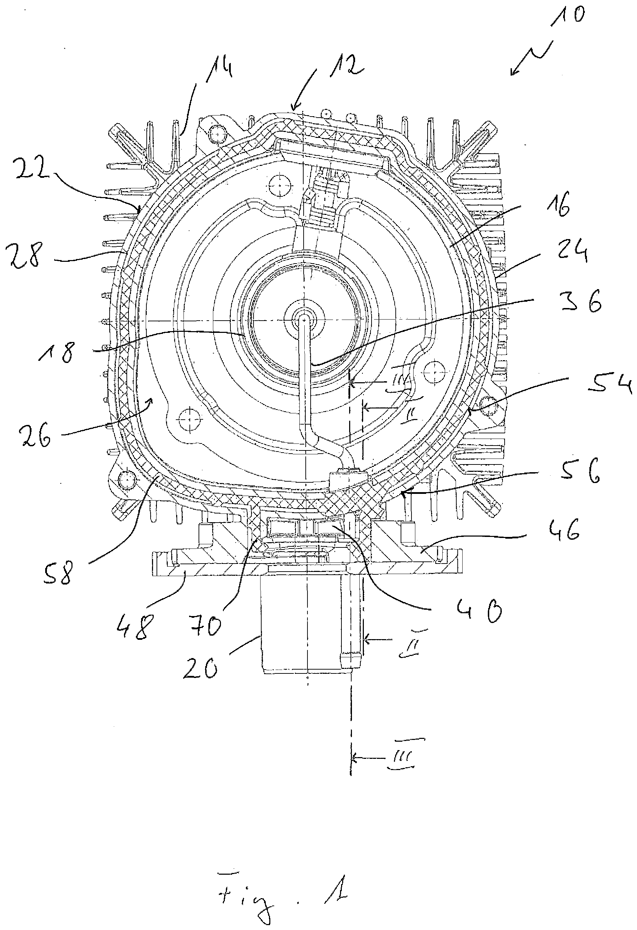

- Fig. 1: eine Querschnittdarstellung eines Fahrzeugheizgerätes, geschnitten längs einer Linie I-I Fig. 2;
- Fig. 2: eine Teil-Längsschnittdarstellung des Fahrzeugheizgerätes der Fig. 1, geschnitten längs einer Linie II-II in Fig. 1;

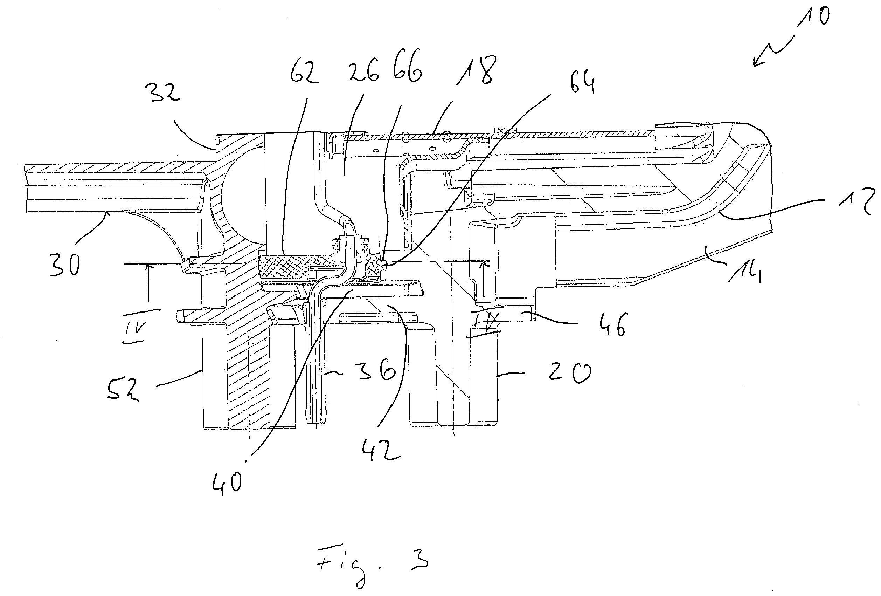

- Fig. 3: eine der Fig. 2 entsprechende Teil-Längsschnittdarstellung des Fahrzeugheizgerätes der Fig. 1, geschnitten längs einer Linie III-III in Fig. 1;

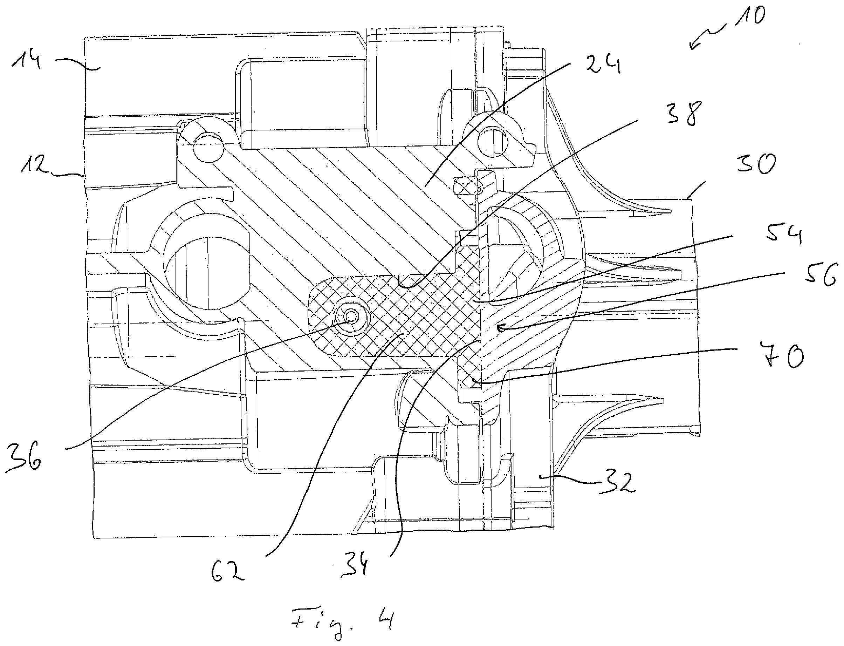

- Fig. 4: eine Teil-Längsschnittdarstellung des Fahrzeugheizgerätes der Fig. 1, geschnitten längs einer Linie IV-IV in Fig. 3;
- Fig. 5: eine perspektivische Teilansicht eines Wärmetauschergehäuses des Fahrzeugheizgerätes der Fig. 1;
- Fig. 6: das in Fig. 5 dargestellte Wärmetauschergehäuse mit einer daran getragenen Brennkammerbaugruppe und einem Dichtelement;

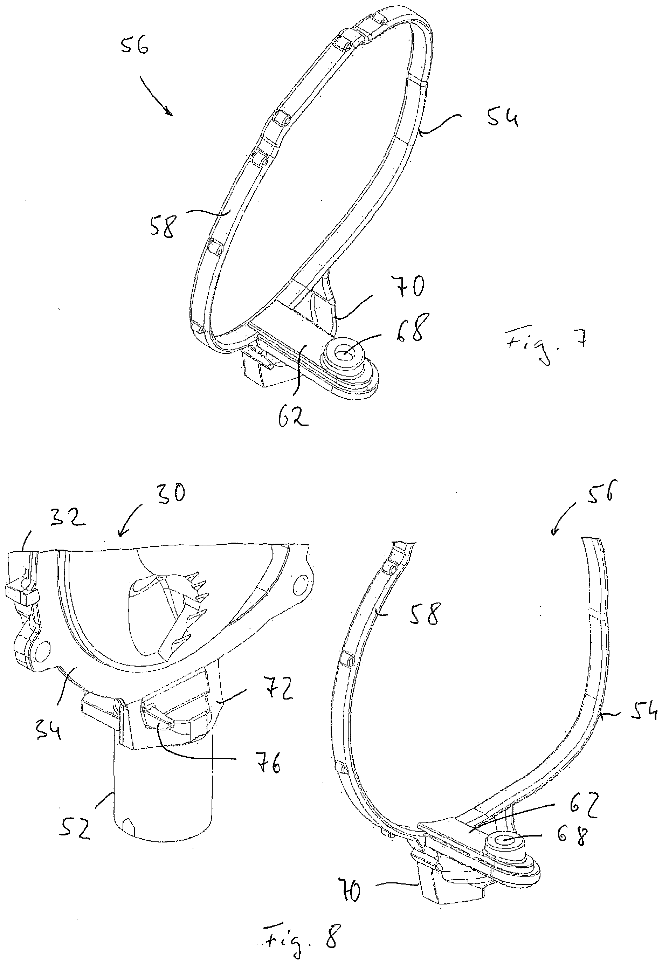

- Fig. 7: das Dichtelement der Fig. 6 in anderer perspektivischer Darstellung;
- Fig. 8: das Dichtelement der Fig. 7 in Verbindung mit einem Verbrennungsluftgebläse.

In den Figuren ist ein brennstoffbetriebenes Fahrzeugheizgerät allgemein mit 10 bezeichnet. Das Fahrzeugheizgerät 10 umfasst ein allgemein mit 12 bezeichnetes Wärmetauschergehäuse, das an seiner Außenseite eine Vielzahl von Wärmeübertragungsrippen 14 aufweist, um auf das Wärmetauschergehäuse 12 umströmende Luft Wärme zu übertragen. An einem Bodenbereich 16 des Wärmetauschergehäuses 12 ist eine allgemein mit 18 bezeichnete Brennkammerbaugruppe beispielsweise durch Verschraubung fest getragen. Die Brennkammerbaugruppe 18 umfasst eine mit Verbrennungsluft und Brennstoff zu speisende Brennkammer. Bei der Verbrennung des so gebildeten Gemisches entsteht ein Abgas, welches entlang der Innenseite des Wärmetauschergehäuses strömt und dabei Wärme auf das Wärmetauschergehäuse überträgt. Das Abgas verlässt den vom Wärmetauschergehäuse 12 umschlossenen Innenraum über einen Abgasauslassstutzen 20.

Ein an den Bodenbereich 16 anschließendes Gehäuse 22 bildet im dargestellten Ausgestaltungsbeispiel einen integralen Bestandteil des Wärmetauschergehäuses 12. Das Gehäuse 22 umschließt mit einer Umfangswandung 24 desselben einen allgemein auch als Plenum bezeichneten Verbrennungsluftströmungsraum 26. Durch diesen Verbrennungsluftströmungsraum 26 hindurch strömt die in der Brennkammerbaugruppe 18 zusammen mit flüssigem Brennstoff zu verbrennende Verbrennungsluft. Die Verbrennungsluft wird durch ein an eine Stirnseite 28 der Umfangswandung 24 anschließend positioniertes Verbrennungsluftgebläse 30 gefördert. Das in den Figuren nur teilweise dargestellte Verbrennungsluftgebläse 30 ist beispielsweise als Seitenkanalgebläse ausgebildet und umfasst ein Gebläsegehäuse 30, welches in seinem Außenumfangsbereich mit einer dort gebildeten Dichtfläche 34 der Stirnseite 28 der Umfangswandung 24 zugewandt in dieser Positionierung mit dem Gehäuse 22 bzw. der Umfangswandung 24 desselben beispielsweise durch Verschraubung fest verbunden ist.

Zum Zuführen von flüssigem Brennstoff zu der Brennkammerbaugruppe 18 schließt eine Brennstoffzuführleitung 36 an die Brennkammerbaugruppe 18 an. Um die Brennstoffzuführleitung 36 durch den Verbrennungsluftströmungsraum 26 hindurch zu der Brennkammerbaugruppe 18 führen zu können, ist in der Umfangswandung 24 des Gehäuses 22 eine Brennstoffzuführleitung-Durchtrittsöffnung 38 ausgebildet. Diese ist in Richtung einer Gehäuselängsachse L zur Stirnseite 28 der Umfangswandung 24 offen.

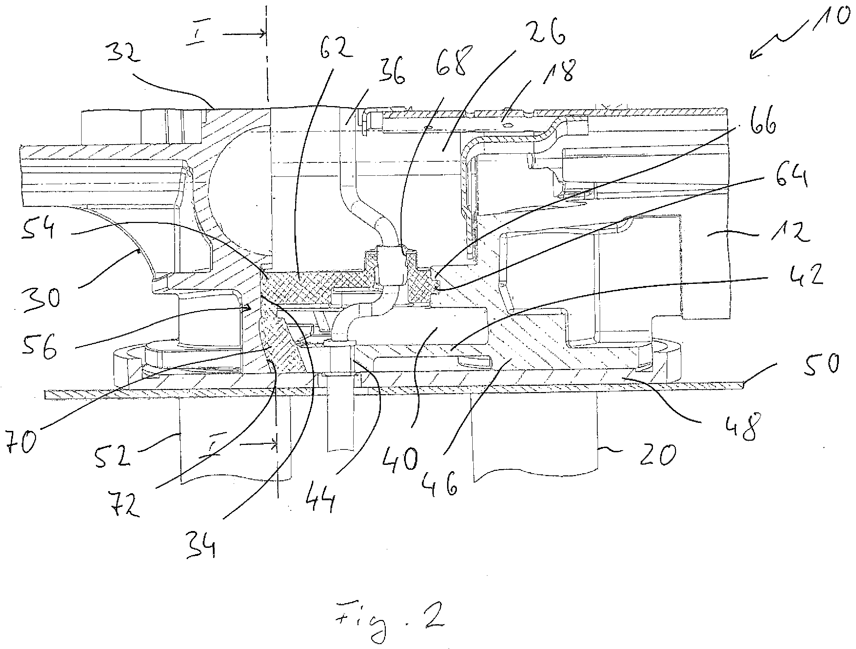

In dem Umfangsbereich, in welchem die Brennstoffzuführleitung-Durchtrittsöffnung 38 in der Umfangswandung 24 ausgebildet ist, ist an der Außenseite der Umfangswandung 24, also an der von Verbrennungsluftströmungsraum 26 abgewandten Seite der Umfangswandung 24, eine Pufferkammer 40 vorgesehen. Die Pufferkammer 40 ist nach außen, also an ihrer von der Umfangswandung 24 abgewandten Seite, und in Umfangsrichtung durch eine Pufferkammerwandung 42 begrenzt und ist in Richtung zur Stirnseite 28 der Umfangswandung 24 offen. Wie beispielsweise in Fig. 2 erkennbar, ist in der Pufferkammerwandung 42 eine Öffnung 44 gebildet, durch welche hindurch die Brennstoffzuführleitung 36 nach außen geführt ist. Auch die von der Brennstoffzuführleitung 36 durchsetzte Öffnung 44 ist in Richtung zur Stirnseite 28 der Umfangswandung 24 offen, so dass beim Einbau der Brennkammerbaugruppe 18 in das Wärmetauschergehäuse 12 die bereits an die Brennkammerbaugruppe 18 angebundene Brennstoffzuführleitung 36 axial in die Brennstoffleitung-Durchtrittsöffnung 38 und die Öffnung 44 in der Pufferkammerwandung 42 eingeführt werden kann.

In demjenigen Bereich des Wärmetauschergehäuses 12 bzw. des damit integral ausgebildeten Gehäuses 22, in welchem die Brennstoffzuführleitung-Durchtrittsöffnung 38 und auch die Pufferkammer 40 gebildet sind, ist integral mit dem Wärmetauschergehäuse 12 ein fußartiger Montagebereich 46 ausgebildet, mit welchem unter Zwischenlagerung einer scheibenartigen Dichtung 48 das Fahrzeugheizgerät 10 angrenzend an einen beispielsweise plattenartigen Träger 50 eines Fahrzeugs positioniert und daran festgelegt werden kann. In diesem plattenartigen Träger 50 sind Öffnungen für den Hindurchtritt des Abgasauslassstutzens 20, der Brennstoffzuführleitung 36 und eines Verbrennungsluftzuführstutzens 52 des Verbrennungsluftgebläses 30 vorgesehen.

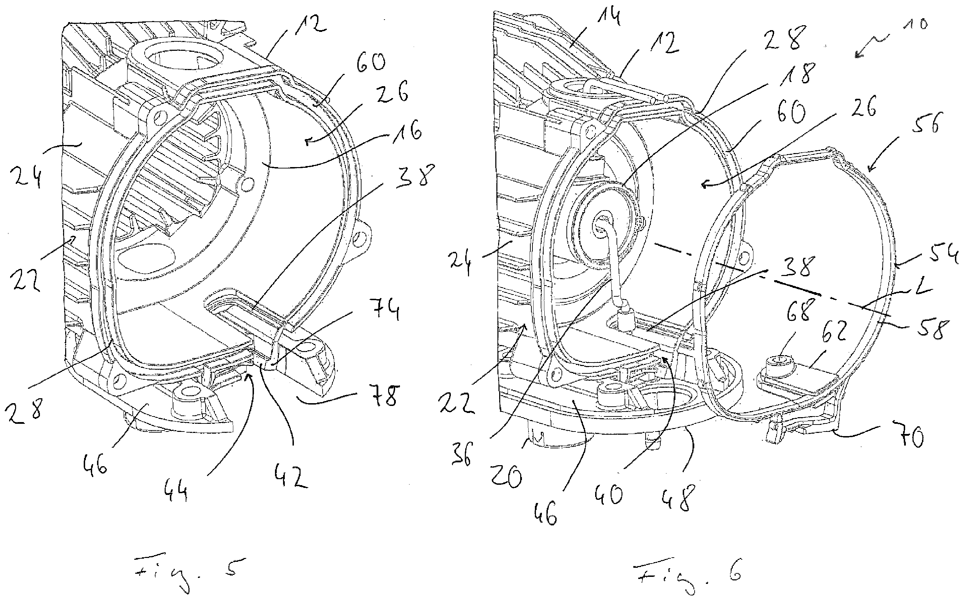

Um einen dichten Abschluss des Verbrennungsluftströmungsraums 26 zu gewährleisten, ist eine im Wesentlichen durch ein Dichtelement 54 aus brennstoffresistentem Elastomermaterial bereitgestellte Dichtformation 56 vorgesehen. Die Dichtformation 56 umfasst einen im Wesentlichen ringartigen ersten Dichtformationsbereich 58, welcher zwischen der Stirnseite 28 der Umfangswandung 24, insbesondere in eine dort vorgesehene Nut 60 eingelegt, und der Dichtfläche 34 des Gebläsegehäuses 32 positioniert wird. Beim Anschrauben des Gebläsegehäuses 32 an das Gehäuse 22 wird das Dichtelement 54 bzw. der erste Dichtformationsbereich 58 desselben komprimiert, beispielsweise bis die Dichtfläche 34 axial an der Stirnseite 28 der Umfangswandung 24 ansteht. Auf diese Art und Weise wird eine übermäßige Anspannung des ersten Dichtformationsbereichs 58 vermieden. Dieser ist, wie in Fig. 6 deutlich zu sehen, in seiner ringartigen Gestalt an die Umfangskontur der Umfangswandung 24 angepasst.

Zur Erlangung eines dichten Abschlusses der Brennstoffzuführleitung-Durchtrittsöffnung 38 ist als integraler Bestandteil des Dichtelements 54 ein zweiter Dichtformationsbereich 62 vorgesehen. Dieser steht in Richtung der Gehäuselängsachse L vom ringartigen ersten Dichtformationsbereich 58 ab, so dass er bei an der Stirnseite 28 der Umfangswandung 24 positioniertem erstem Dichtformationsbereich 58 in die Brennstoffzuführleitung-Durchtrittsöffnung 38 eingreifend positioniert ist. Man erkennt in den Figuren, dass der zweite Dichtformationsbereich 62 eine Außenumfangskontur aufweist, welche an die Kontur der Brennstoffzuführleitung-Durchtrittsöffnung 38 angepasst ist, so dass der Außenumfang des zweiten Dichtformationsbereichs 62 beispielsweise unter leichter Vorspannung mit einem diesen umgebenden Federbereich 64 in einen Nutbereich 66 am Innenumfang der Brennstoffzuführleitung-Durchtrittsöffnung 38 eingreifend positioniert ist.

In Zuordnung zur Brennstoffzuführleitung 36 ist am zweiten Dichtformationsbereich 62 eine Öffnung 68 gebildet. Wie in Fig. 2 zu erkennen, kann die Brennstoffzuführleitung 36 in dem Bereich, in welchem sie die Öffnung 68 durchsetzt, eine radiale Erweiterung aufweisen, so dass gewährleistet ist, dass der zweite Dichtformationsbereich 62 aufgrund der Elastizität des Aufbaumaterials des Dichtelements 54 unter Vorspannung am Außenumfang der Brennstoffzuführleitung 36 anliegt und dort einen im Wesentlichen fluiddichten Abschluss herstellt.

Das Dichtelement 54 weist ferner als integralen Bestandteil einen dritten Dichtformationsbereich 70 auf. Dieser erstreckt sich ringartig bzw. bogenartig an der Außenseite des ringartigen ersten Dichtformationsbereichs 58 und umgibt die in Richtung zum Gebläsegehäuse 32 hin grundsätzlich offene Pufferkammer 40. Der dritte Dichtformationsbereich 70 liegt somit in axialer Richtung zwischen einer an die Dichtfläche 34 des Gebläsegehäuses 32 anschließenden weiteren Dichtfläche 72 und einer dieser axial gegenüberliegenden Stirnseite 74 der Pufferkammerwandung 42.

Auch der dritte Dichtformationsbereich 70 bildet einen integralen Bestandteil des Dichtelements 54, so dass gewährleistet ist, dass in denjenigen Bereichen, in welchen die verschiedenen Dichtformationsbereiche 58, 62, 70 aneinander angrenzen, durch integrale Ausgestaltung ein dichter Anschluss erreicht ist. Im zusammengebauten Zustand liegen der erste Dichtformationsbereich 58 und der dritte Dichtformationsbereich 70 somit zwischen dem Gehäuse 22 bzw. jeweiligen Stirnseiten 28, 74 der Umfangswandung 24 bzw. der Pufferkammerwandung 42 einerseits und den diesen axial gegenüberliegenden Dichtflächen 34, 72 des Gebläsegehäuses 32. Der zweite Dichtformationsbereich 62 greift in die Brennstoffzuführleitung-Durchtrittsöffnung 38 ein und stellt einen dichten Abschluss zwischen der Pufferkammer 40 und dem Verbrennungsluftströmungsraum 26 her. Dabei kann vor dem Einsetzen der Brennkammerbaugruppe 18 die Brennstoffzuführleitung 36 die Öffnung 68 im zweiten Dichtformationsbereich 62 durchsetzend positioniert werden, so dass beim Einsetzen der Brennkammerbaugruppe 18 und dabei Einführen der Brennstoffzuführleitung 36 in die axial offenen Öffnungen 38, 44 auch das Dichtelement 54 mit dem zweiten Dichtformationsbereich 62 in die Brennstoffzuführleitung-Durchtrittsöffnung 38 eingeführt werden, bis der erste Dichtformationsbereich 58 an der Stirnseite 28 beispielsweise in die Nut 60 eingreifend positioniert ist und der dritte Dichtformationsbereich 70 an der Stirnseite 74 der Pufferkammerwandung 42 anliegend positioniert ist. Darauf folgend kann dann das Gebläsegehäuse 32 axial an das Gehäuse 22 herangeführt werden, bis dieses mit seinen Dichtflächen 34, 72 am ersten Dichtformationsbereich 58 bzw. am dritten Dichtformationsbereich 70 anliegt. In diesem Zustand greift ein am Gebläsegehäuse 32 vorgesehener Dorn 76 in die Pufferkammer 40 ein und bildet eine axiale Stütze für die Brennstoffzuführleitung 36. In diesem Zustand liegt der Verbrennungsluftzuführstutzen 52 in einer Aussparung 78 des Montagebereichs 46, auf welchen nachfolgend die plattenartige Dichtung 48 aufgeschoben werden kann.

## Patentansprüche

1. Fahrzeugheizgerät, umfassend
- eine mit Brennstoff und Verbrennungsluft zu speisende Brennkammerbaugruppe (18),
- ein mit einer Umfangswandung (24) einen Verbrennungsluftströmungsraum (26) umgrenzendes Gehäuse (22),
- ein in Richtung einer Gehäuselängsachse (L) an eine Stirnseite (28) der Umfangswandung (24) des Gehäuses (12) anschließendes Verbrennungsluftgebläse (30) zum Fördern von Verbrennungsluft in den Verbrennungsluftströmungsraum (26),
- eine an die Brennkammerbaugruppe (18) anschließende Brennstoffzuführleitung (36) zum Zuführen von Brennstoff zu der Brennkammerbaugruppe (18), wobei in der Umfangswandung (24) eine zu der Stirnseite (28) der Umfangswandung (24) offene Brennstoffzuführleitung-Durchtrittsöffnung (38) vorgesehen ist,
- eine Dichtformation (56) mit einem ersten Dichtformationsbereich (58), wobei der erste Dichtformationsbereich (58) zum Herstellen eines im Wesentlichen fluiddichten Abschlusses zwischen der Stirnseite (28) der Umfangswandung (24) und einem Gebläsegehäuse (32) des Verbrennungsluftgebläses (30) zwischen der Stirnseite (28) der Umfangswandung (24) und dem Gebläsegehäuse (32) angeordnet ist, und mit einem zweiten Dichtformationsbereich (62), wobei der zweite Dichtformationsbereich (62) zum Herstellen eines im Wesentlichen fluiddichten Abschlusses zwischen der Umfangswandung (24) und der Brennstoffzuführleitung (36) in die Brennstoffzuführleitung-Durchtrittsöffnung (38) eingreifend positioniert ist, wobei die Dichtformation (56) ein den ersten Dichtformationsbereich (58) und den zweiten Dichtformationsbereich (62) bereitstellendes Dichtelement (54) umfasst.

2. Fahrzeugheizgerät nach Anspruch 1, wobei der erste Dichtformationsbereich (58) an eine Umfangskontur der Umfangswandung (24) angepasst ringartig ausgebildet ist.

3. Fahrzeugheizgerät nach Anspruch 1 oder 2, wobei der zweite Dichtformationsbereich (62) vom ersten Dichtformationsbereich (58) sich im Wesentlichen in Richtung der Gehäuselängsachse (L) abstehend und in die Brennstoffzuführleitung-Durchtrittsöffnung (38) eingreifend erstreckt, und wobei der zweite Dichtformationsbereich (62) eine an eine Kontur der Brennstoffzuführleitung-Durchtrittsöffnung (38) angepasste Außenumfangskontur aufweist.

4. Fahrzeugheizgerät nach einem der vorangehenden Ansprüche, wobei im zweiten Dichtformationsbereich (62) eine von der Brennstoffzuführleitung (36) durchsetzte Öffnung (68) ausgebildet ist.

5. Fahrzeugheizgerät nach einem der vorangehenden Ansprüche, wobei an dem Gehäuse (22) im Bereich der Brennstoffzuführleitung-Durchtrittsöffnung (38) an einer Außenseite der Umfangswandung (24) eine Pufferkammer (40) vorgesehen ist, wobei die Pufferkammer (40) an der Stirnseite (28) der Umfangswandung in Richtung der Gehäuselängsachse (L) offen ist und nach radial innen durch die Umfangswandung (24) und nach radial außen und in Umfangsrichtung durch eine an die Umfangswandung (24) anschließende Pufferkammerwandung (42) begrenzt ist, wobei in der Pufferkammerwandung (42) eine von der Brennstoffzuführleitung (36) durchsetzte Öffnung (44) vorgesehen ist, und wobei der zweite Dichtformationsbereich (62) im Bereich der Umfangswandung (24) einen im Wesentlichen fluiddichten Abschluss zwischen der Pufferkammer (40) und dem Verbrennungsluftströmungsraum (26) herstellt.

6. Fahrzeugheizgerät nach Anspruch 5, wobei die Dichtformation (56) einen dritten Dichtformationsbereich (70) aufweist, wobei der dritte Dichtformationsbereich (70) zur Herstellung eines im Wesentlichen fluiddichten Abschlusses zwischen der Pufferkammerwandung (42) und dem Gebläsegehäuse (32) zwischen der Pufferkammerwandung (42) und dem Gebläsegehäuse (32) angeordnet ist.

7. Fahrzeugheizgerät nach Anspruch 5 oder 6, wobei das Dichtelement (54) den dritten Dichtformationsbereich (70) aufweist.

8. Fahrzeugheizgerät nach einem der vorangehenden Ansprüche, wobei das Dichtelement (54) aus Elastomermaterial aufgebaut ist.

9. Fahrzeugheizgerät nach einem der vorangehenden Ansprüche, wobei das Gehäuse (22) Teil eines Wärmetauschergehäuses (12) ist, und wobei die Brennkammerbaugruppe (18) an einem Bodenbereich (16) des Wärmetauschergehäuses (12) getragen ist.

## Claims

1. Vehicle heating device, comprising
- a combustion chamber assembly unit (18) to be fed with fuel and combustion air,
- a housing (22) defining a combustion air flow space (26) with a circumferential wall (24),
- a combustion air blower (30) adjoining an end face (28) of the circumferential wall (24) of the housing (12) in the direction of a housing longitudinal axis (L) for delivering combustion air into the combustion air flow space (26),
- a fuel feed line (36) adjoining the combustion chamber assembly unit (18) for feeding fuel to the combustion chamber assembly unit (18), wherein a fuel feed line passage opening (38), which is open towards the end face (28) of the circumferential wall (24), is provided in the circumferential wall (24),
- a sealing formation (56) with a first sealing formation area (58), wherein the first sealing formation area (58) is arranged between the end face (28) of the circumferential wall (24) and the blower housing (32) for establishing an essentially fluid-tight closure between the end face (28) of the circumferential wall (24) and a blower housing (32) of the combustion air blower (30), and with a second sealing formation area (62), wherein the second sealing formation area (62) is positioned such that it meshes with the fuel feed line passage opening (38) to establish an essentially fluid-tight closure between the circumferential wall (24) and the fuel feed line (36), wherein the sealing formation (56) comprises a sealing element (54) providing the first sealing formation area (58) and the second sealing formation area (62).

2. Vehicle heating device in accordance with claim 1, wherein the first sealing formation area (58) is configured in a ring-shaped manner adapted to a circumferential contour of the circumferential wall (24).

3. Vehicle heating device in accordance with claim 1 or 2, wherein the second sealing formation area (62) extends from the first sealing formation area (58) projecting essentially in the direction of the housing longitudinal axis (L) and meshing with the fuel feed line passage opening (38), and wherein the second sealing formation area (62) has an outer circumferential contour adapted to a contour of the fuel feed line passage opening (38).

4. Vehicle heating device in accordance with one of the preceding claims, wherein an opening (68), through which the fuel feed line (36) passes, is formed in the second sealing formation area (62).

5. Vehicle heating device in accordance with one of the preceding claims, wherein a buffer chamber (40) is provided on the housing (22) in the area of the fuel feed line passage opening (38) on an outer side of the circumferential wall (24), wherein the buffer chamber (40) is open at the end face (28) of the circumferential wall in the direction of the housing longitudinal axis (L) and is defined radially inwardly by the circumferential wall (24) and radially outwardly and in the circumferential direction by a buffer chamber wall (42) adjoining the circumferential wall (24), wherein an opening (44), through which the fuel feed line (36) passes, is provided in the buffer chamber wall (42), and wherein the second sealing formation area (62) establishes an essentially fluid-tight closure between the buffer chamber (40) and the combustion air flow space (26) in the area of the circumferential wall (24).

6. Vehicle heating device in accordance with claim 5, wherein the sealing formation (56) has a third sealing formation area (70), wherein the third sealing formation area (70) is arranged between the buffer chamber wall (42) and the blower housing (32) to establish an essentially fluid-tight closure between the buffer chamber wall (42) and the blower housing (32).

7. Vehicle heating device in accordance with claim 5 or 6, wherein the sealing element (54) comprises the third sealing formation area (70).

8. Vehicle heating device in accordance with one of the preceding claims, wherein the sealing element (54) is made of an elastomeric material.

9. Vehicle heating device in accordance with one of the preceding claims, wherein the housing (22) is a part of a heat exchanger housing (12) and wherein the combustion chamber assembly unit (18) is carried on a bottom area (16) of the heat exchanger housing (12).

## Revendications

1. Dispositif de chauffage de véhicule, comprenant
- un module de chambre de combustion (18) qui doit être alimentée en combustible et en air de combustion,
- un boîtier (22) définissant un espace d'écoulement d'air de combustion (26) avec une paroi circonférentielle (24),
- une soufflante d'air de combustion (30) se raccordant à une face frontale (28) de la paroi circonférentielle (24) du boîtier (12) dans la direction d'un axe longitudinal de boîtier (L) pour délivrer de l'air de combustion dans l'espace d'écoulement d'air de combustion (26),
- une conduite d'alimentation en carburant (36) se raccordant au module de chambre de combustion (18) pour alimenter en carburant le module de chambre de combustion (18), dans laquelle une ouverture de passage de conduite d'alimentation en carburant (38), qui est ouverte vers la face frontale (28) de la paroi circonférentielle (24), est prévue dans la paroi circonférentielle (24),
- une formation d'étanchéité (56) avec une première zone de formation d'étanchéité (58), la première zone de formation d'étanchéité (58) étant arrangée entre la face frontale (28) de la paroi circonférentielle (24) et le boîtier de soufflante (32) pour établir une fermeture essentiellement étanche aux fluides entre la face frontale (28) de la paroi circonférentielle (24) et un boîtier de soufflante (32) de la soufflante d'air de combustion (30), et avec une deuxième zone de formation d'étanchéité (62), dans lequel la deuxième zone de formation d'étanchéité (62) est positionnée de telle sorte qu'elle s'engrène avec l'ouverture de passage de conduite d'alimentation en carburant (38) pour établir une fermeture essentiellement étanche aux fluides entre la paroi circonférentielle (24) et la conduite d'alimentation en carburant (36), dans lequel la formation d'étanchéité (56) comprend un élément d'étanchéité (54) fournissant la première zone de formation d'étanchéité (58) et la deuxième zone de formation d'étanchéité (62).

2. Dispositif de chauffage de véhicule selon la revendication 1, dans lequel la première zone de formation d'étanchéité (58) est configurée d'une manière annulaire adaptée à un contour circonférentiel de la paroi circonférentielle (24).

3. Dispositif de chauffage de véhicule selon la revendication 1 ou 2, dans lequel la deuxième zone de formation d'étanchéité (62) s'étend à partir de la première zone de formation d'étanchéité (58) en faisant saillie essentiellement dans la direction de l'axe longitudinal de boîtier (L) et s'engrenant avec l'ouverture de passage de conduite d'alimentation en carburant (38), et dans lequel la deuxième zone de formation d'étanchéité (62) a un contour circonférentiel extérieur adapté à un contour de l'ouverture de passage de conduite d'alimentation en carburant (38).

4. Dispositif de chauffage de véhicule selon l'une des revendications précédentes, dans lequel une ouverture (68), à travers laquelle passe la conduite d'alimentation en carburant (36), est formée dans la deuxième zone de formation d'étanchéité (62).

5. Dispositif de chauffage de véhicule selon l'une des revendications précédentes, dans lequel une chambre tampon (40) est prévue sur le boîtier (22) dans la zone de l'ouverture de passage de conduite d'alimentation en carburant (38) sur un côté extérieur de la paroi circonférentielle (24), dans lequel la chambre tampon (40) est ouverte sur la face frontale (28) de la paroi circonférentielle dans la direction de l'axe longitudinal de boîtier (L) et est définie radialement vers l'intérieur par la paroi circonférentielle (24) et radialement vers l'extérieur et dans la direction circonférentielle par une paroi de chambre tampon (42) adjacente à la paroi circonférentielle (24), dans lequel une ouverture (44), à travers laquelle passe la conduite d'alimentation en combustible (36), est prévue dans la paroi de chambre tampon (42), et
dans lequel la deuxième zone de formation d'étanchéité (62) établit une fermeture essentiellement étanche aux fluides entre la chambre tampon (40) et l'espace d'écoulement d'air de combustion (26) dans la zone de la paroi circonférentielle (24).

6. Dispositif de chauffage de véhicule selon la revendication 5, dans lequel la formation d'étanchéité (56) présente une troisième zone de formation d'étanchéité (70), dans lequel la troisième zone de formation d'étanchéité (70) est arrangée entre la paroi de chambre tampon (42) et le boîtier de soufflante (32) pour établir une fermeture essentiellement étanche aux fluides entre la paroi de chambre tampon (42) et le boîtier de soufflante (32).

7. Dispositif de chauffage de véhicule selon les revendications 5 ou 6, dans lequel l'élément d'étanchéité (54) comprend la troisième zone de formation d'étanchéité (70).

8. Dispositif de chauffage de véhicule selon l'une des revendications précédentes, dans lequel l'élément d'étanchéité (54) est constitué d'un matériau élastomère.

9. Dispositif de chauffage de véhicule selon l'une des revendications précédentes, dans lequel le boîtier (22) est une partie d'un boîtier d'échangeur de chaleur (12) et dans lequel le module de chambre de combustion (18) est portée sur une zone de fond (16) du boîtier d'échangeur de chaleur (12).
